# DEMANDE DE BREVET EUROPEEN

(11) **EP 4 580 012 A1**
(43) Date de publication de la demande: **02.07.2025**
(21) Numéro de dépôt: 24214074.7
(22) Date de dépôt: 20.11.2024
(51) Int. Cl.: H02K 9/19, H02K 3/24

(54) **MACHINE ÉLECTRIQUE TOURNANTE**

(30) Priorité: 30.12.2023 FR 2315524
(71) Demandeur: Valeo eAutomotive Germany GmbH, 91056 Erlangen (DE)
(72) Inventeur: MAHALINGAM, Mahesh Babu, 600130 Chennai, Tamil Nadu (IN); KRISHNAN, Hari, 600130 Chennai, Tamil Nadu (IN); KUPPUSAMY, Venkatesan, 600130 Chennai, Tamil Nadu (IN); KURUVILLA, Geogi, 600130 Chennai, Tamil Nadu (IN); FAKES, Michel, 94046 Créteil (FR)
(74) Mandataire: Valeo Powertrain Systems

(57) **Abrégé**

Machine électrique tournante (1) comportant :
- un stator (2) comportant un bobinage (7) formant des chignons (7a, 7b) aux extrémités axiales, le stator (2) étant solidaire d'un carter (5) de la machine électrique tournante (1), le carter (5) comprenant au moins un palier (6),
- un rotor (3) solidaire d'un arbre (4) de ladite machine (1),
- un circuit de refroidissement comportant une amenée de fluide (12) ménagée dans le carter (5) et un anneau creux de refroidissement (15) fixé au carter (5) et présentant une entrée (16) communiquant fluidiquement avec l'amenée de fluide (12) et une paroi annulaire chanfreinée (17) dans laquelle au moins un premier orifice de sortie (18) est ménagé pour projeter le fluide de refroidissement sur les chignons (7a) du bobinage (7) dans une direction inclinée par rapport à la direction axiale.

## Description

### Domaine technique de l'invention

La présente invention porte sur une machine électrique tournante à refroidissement optimisé.

### Arrière-plan technique

Les machines électriques tournantes comportent un stator et un rotor solidaire d'un arbre. Le stator comprend des enroulements formant des chignons faisant saillie de part et d'autre d'un corps du stator.

Ces machines électriques tournantes ont tendance à s'échauffer en cours de fonctionnement.

On connait du document FR3036551A1, une machine électrique tournante comportant un circuit de refroidissement configuré pour acheminer de l'huile en tête d'arbre. Cette huile circule dans un alésage central de l'arbre pour être ensuite projetée par force centrifuge sur les chignons avant et arrière du bobinage par des orifices radiaux ménagés dans l'arbre de part et d'autre du rotor.

On constate cependant que la pression d'huile disponible à l'entrée de la tête d'arbre peut ne pas toujours être suffisante pour projeter efficacement l'huile sur les chignons. Plus précisément, la pression d'entrée peut être insuffisante pour permettre de projeter l'huile de manière équilibrée de chaque côté du rotor et uniformément sur toute la circonférence des chignons.

### Résumé de l'invention

Un des buts de la présente invention est de proposer une machine électrique tournante permettant de résoudre au moins partiellement les inconvénients de l'art antérieur.

A cet effet, l'invention a pour objet une machine électrique tournante comportant :
- un stator comportant un bobinage formant des chignons aux extrémités axiales, le stator étant solidaire d'un carter de la machine électrique tournante, le carter comprenant au moins un palier, de préférence deux paliers,
- un rotor solidaire d'un arbre de ladite machine,
- un circuit de refroidissement comportant une amenée de fluide ménagée dans le carter et configurée pour acheminer un fluide de refroidissement,
caractérisé en ce que le circuit de refroidissement comporte en outre un anneau creux de refroidissement fixé au carter et présentant une entrée communiquant avec l'amenée de fluide et une paroi annulaire chanfreinée dans laquelle au moins un premier orifice de sortie est ménagé pour projeter le fluide de refroidissement sur les chignons du bobinage dans une direction inclinée par rapport à la direction axiale.

La direction inclinée est en biais par rapport à la direction axiale et par rapport à la direction radiale, c'est-à-dire qu'elle forme un angle avec la direction axiale qui est inférieur à 90°.

Du fait de la pression d'entrée, le fluide de refroidissement acheminé dans l'anneau creux de refroidissement est projeté en biais via le au moins un premier orifice de sortie dudit anneau vers les chignons. Il est ainsi possible de refroidir efficacement les chignons du bobinage par un ciblage du jet de fluide de refroidissement au plus près des chignons malgré la possible faible pression d'entrée du fluide de refroidissement.

La machine électrique tournante peut en outre comporter une ou plusieurs des caractéristiques qui sont décrites ci-après, prises seules ou en combinaison.

Deux anneaux creux peuvent être prévus de part et d'autre du rotor.

Le rotor peut comporter des aimants permanents. Alternativement le rotor peut être à excitation externe, il est alors être bobiné et peut ne pas comporter d'aimants. L'anneau creux et le premier orifice permettent de projeter le fluide directement sur les chignons du stator tout en évitant le bobinage du rotor qui se trouve radialement entre les chignons du stator et l'arbre de la machine.

L'angle au sommet du cône dans lequel s'inscrit la paroi annulaire chanfreinée est par exemple compris entre 70° et 110°, notamment entre 80° et 100°, tel que 90°.

Une pluralité de premiers orifices de sortie peut être ménagés dans la paroi annulaire chanfreinée, tel qu'entre dix et trente premiers orifices de sortie.

L'anneau creux de refroidissement est par exemple au moins en partie reçu dans le bobinage. Autrement dit, il existe un plan perpendiculaire à l'axe de rotation qui traverse l'anneau creux de refroidissement, en passant par exemple par les orifices de sortie et par le bobinage.

Selon un exemple de réalisation, une section radiale de l'anneau creux de refroidissement s'inscrit dans un rectangle dont un coin est tronqué par la paroi annulaire chanfreinée.

Selon un exemple de réalisation, l'entrée de l'anneau creux de refroidissement est tubulaire et s'étend dans une direction axiale, l'entrée étant située sur une face de l'anneau creux de refroidissement opposée à celle en regard du rotor. L'anneau creux de refroidissement est par exemple fixé au carter par un dispositif de fixation, agencé par exemple au niveau de l'entrée tubulaire de l'anneau creux de refroidissement et/ou à distance de l'entrée sur la périphérie de l'anneau, tel que diamétralement opposé à l'entrée.

Selon un exemple de réalisation, au moins un deuxième orifice de sortie est ménagé dans l'anneau creux de refroidissement face au rotor, pour projeter le fluide de refroidissement sur le rotor dans une direction axiale.

Selon un exemple de réalisation, l'anneau creux de refroidissement présente une couronne en saillie radiale dans laquelle au moins un troisième orifice de sortie est ménagé pour projeter le fluide de refroidissement sur les chignons du bobinage dans une direction axiale.

Selon un exemple de réalisation, l'arbre présente un orifice central, ouvert à une extrémité axiale et débouchant par au moins un orifice radial, l'amenée de fluide étant configurée pour acheminer le fluide de refroidissement dans l'orifice central de l'arbre creux pour projeter un fluide de refroidissement sur les chignons du bobinage par le au moins un orifice radial.

Au moins un orifice radial peut être ménagé dans l'arbre de part et d'autre du rotor.

### Brève description des figures

D'autres avantages et caractéristiques apparaîtront à la lecture de la description suivante d'un mode de réalisation particulier de l'invention, mais nullement limitatif, ainsi que des dessins annexés sur lesquels :
[Fig. 1] La figure 1 est une vue schématique en coupe longitudinale d'un premier exemple de réalisation d'une machine électrique tournante.
[Fig. 2] La figure 2 est une vue en perspective d'éléments de la machine électrique tournante de la figure 1.
[Fig. 3] La figure 3 est une vue en perspective d'un anneau creux de refroidissement de la machine électrique tournante de la figure 2 retourné de 180°.
[Fig. 4] La figure 4 est une vue en coupe de l'anneau creux de refroidissement de la figure 3 retourné de 180°.
[Fig. 5] La figure 5 est une vue schématique en coupe longitudinale d'un deuxième exemple de réalisation d'une machine électrique tournante.
[Fig. 6] La figure 6 est une vue schématique en coupe longitudinale d'un troisième exemple de réalisation d'une machine électrique tournante.

Sur ces figures, les éléments identiques portent les mêmes numéros de référence.

### Description détaillée

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

La direction axiale (ou longitudinale) est parallèle à l'axe de rotation X1 du rotor 3 de la machine électrique tournante 1. La direction radiale X2 (ou transversale) est perpendiculaire à la direction axiale.

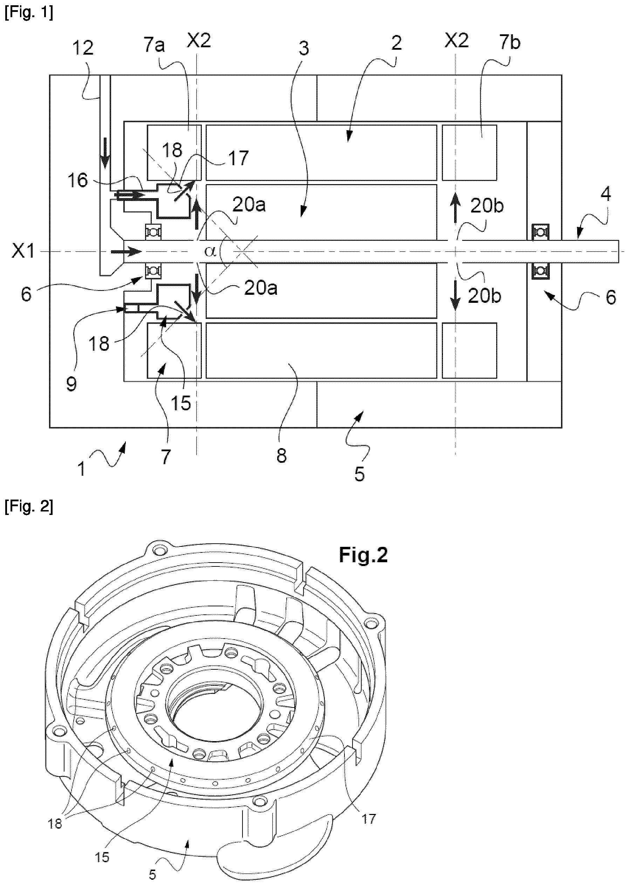

La figure 1 montre une machine électrique tournante 1 comportant un stator 2 entourant un rotor 3 d'axe de rotation X1 solidaire d'un arbre 4 de la machine 1 sur lequel le rotor 3 est par exemple monté par emmanchement.

Le stator 2 est solidaire d'un carter 5 de la machine électrique tournante 1, réalisé en un ou plusieurs éléments et dans lequel le stator 2 est reçu.

Le carter 5 comprend au moins un palier 6, de préférence deux paliers 6, de part et d'autre du rotor 3 (axialement), permettant de guider et soutenir l'arbre 4 en rotation.

Le stator 2 de la machine 1 entoure le rotor 3 avec présence d'un entrefer entre la périphérie interne du stator 2 et la périphérie externe du rotor 3.

Cette machine électrique 1 peut par exemple être accouplée à une boîte de vitesses appartenant à une chaîne de traction de véhicule automobile. La machine 1 est alors apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La machine électrique 1 peut également propulser le véhicule qui peut être uniquement à propulsion électrique.

Le rotor 3 peut comporter des aimants permanents ou alternativement, les pôles du rotor 3 peuvent être formés par un bobinage qui comprend également des chignons de rotor. Le bobinage du rotor peut être alimenté par des bagues conductrices montées sur l'arbre 4 ou par un transformateur dont une partie mobile est montrée sur l'arbre.

Le stator 2 comporte un corps 8 sur lequel est monté un ensemble d'enroulements ou bobinage 7. Le bobinage 7 du stator 2 forme à une extrémité axiale du bobinage 7, un chignon 7a avant et à l'extrémité axiale opposée, un chignon 7b arrière, les chignons 7a, 7b s'étendant en saillie du corps 8 du stator 2 de part et d'autre du corps 8.

Ces enroulements sont par exemple des enroulements triphasés connectés en étoile ou en triangle. Les sorties des enroulements de phase sont par exemple reliées à un pont redresseur et/ou onduleur comportant des composants électroniques, tels que des diodes ou des transistors du type MOSFET, notamment lorsqu'il s'agit d'une machine réversible.

La machine électrique 1 est refroidie au moyen d'un circuit de refroidissement configuré pour permettre l'écoulement d'un liquide de refroidissement, par exemple un fluide caloporteur comme de l'huile, sur le bobinage 7.

Pour cela, le circuit de refroidissement comporte une amenée de fluide 12 et un anneau creux de refroidissement 15 fixé au carter 5 (figures 1 et 2).

L'amenée de fluide 12 est configurée pour alimenter le circuit de refroidissement en fluide de refroidissement. Cette amenée de fluide 12 est ménagée dans le carter 5, par exemple dans une paroi latérale dans laquelle est ménagé le palier 6 avant ou arrière du carter 5.

L'anneau creux de refroidissement 15 est agencé coaxialement à l'axe de rotation X1. Il présente une entrée 16 communiquant fluidiquement avec l'amenée de fluide 12.

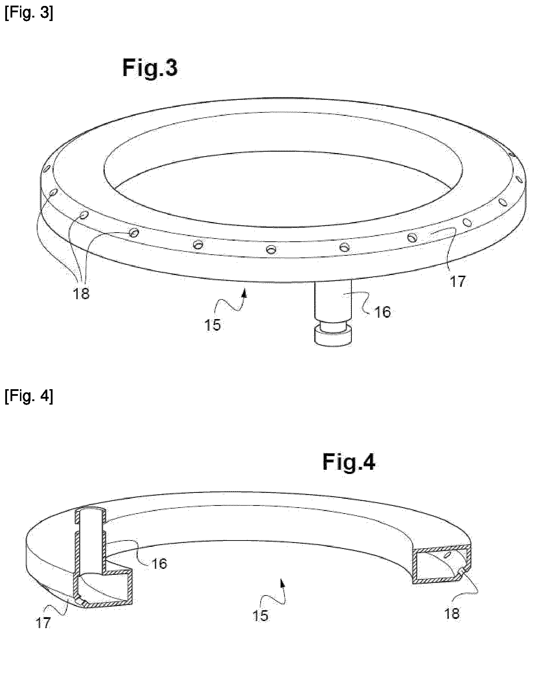

Selon un exemple de réalisation visible sur les figures 3 et 4, l'entrée 16 de l'anneau creux de refroidissement 15 est tubulaire et s'étend par exemple dans la direction axiale. L'entrée 16 est par exemple située sur une face de l'anneau 15 opposée à celle en regard du rotor 3.

L'anneau creux de refroidissement 15 peut être fixé au carter 5 par un dispositif de fixation 9, agencé par exemple au niveau de l'entrée 16 tubulaire de l'anneau creux de refroidissement 14 et/ou à distance de l'entrée 16 sur la périphérie de l'anneau 14, tel que diamétralement opposé à l'entrée 16 comme illustré sur la figure 1.

Mieux visible sur les figures 2 à 4, l'anneau creux de refroidissement 15 comporte une paroi annulaire chanfreinée 17 dans laquelle au moins un premier orifice de sortie 18 est ménagé pour projeter le fluide de refroidissement sur les chignons 7a, 7b du bobinage 7 par le au moins un premier orifice de sortie 18 dans une direction inclinée par rapport à la direction axiale. Le premier orifice 18 permet de projeter le fluide directement sur les chignons du stator tout en évitant les chignons du rotor qui se trouve radialement entre les chignons 7a, 7b du stator et l'arbre 4, lorsque le rotor 3 est bobiné.

La direction inclinée est en biais par rapport à la direction axiale et par rapport à la direction radiale, c'est-à-dire qu'elle forme un angle avec la direction axiale qui est inférieur à 90°.

L'angle α au sommet du cône dans lequel s'inscrit la paroi annulaire chanfreinée 17 est par exemple compris entre 70° et 110°, tel que 90° (figure 1).

L'angle de la paroi annulaire chanfreinée 17 permet d'assurer une projection ciblée du fluide de refroidissement sur les chignons 7a.

Il y a par exemple une pluralité de premiers orifices de sortie 18 ménagés dans la paroi annulaire chanfreinée 17 de l'anneau creux de refroidissement 15, tel qu'entre dix et trente premiers orifices de sortie 18, ici vingt, qui sont répartis angulairement de manière régulière sur la circonférence de la paroi annulaire chanfreinée 17 (figures 2 et 3).

Selon un exemple de réalisation mieux visible sur la figure 4, la section radiale de l'anneau creux de refroidissement 15 s'inscrit dans un rectangle dont un coin est tronqué par la paroi annulaire chanfreinée 17.

L'anneau creux de refroidissement 15 peut en outre être au moins en partie reçu dans le bobinage 7, c'est-à-dire qu'il existe un plan perpendiculaire à l'axe de rotation X1 qui traverse l'anneau creux de refroidissement 15, en passant par exemple par les orifices de sortie 18 et par le bobinage 7 (figure 1).

L'anneau creux de refroidissement 15 est par exemple en matériau plastique. Il peut être obtenu par surmoulage.

Selon un exemple de réalisation, l'amenée de fluide 12 du circuit de refroidissement achemine également un fluide de refroidissement dans l'arbre 4, en parallèle de l'acheminement du fluide de refroidissement dans l'anneau creux de refroidissement 15.

Pour cela, l'arbre 4 de la machine 1 présente un orifice central (ou alésage central), par exemple cylindrique, ouvert à une extrémité axiale, fermé à l'autre extrémité et débouchant sur le côté de l'arbre 4 par au moins un orifice radial 20a, 20b.

Il y a par exemple au moins un orifice radial 20a, 20b ménagé de part et d'autre du rotor 3, c'est-à-dire au moins deux orifices radiaux 20a, 20b.

Avantageusement, de chaque côté du rotor 3, il y a plus de deux orifices radiaux 20a, 20b, tel qu'entre deux et six orifices radiaux 20a, 20b, qui sont répartis angulairement de manière régulière suivant une circonférence de l'arbre 4.

Les orifices radiaux 20a, 20b, par exemple cylindriques, présentent un axe X2 respectif d'orientation radiale. Ils débouchent face aux chignons 7a, 7b du bobinage 7, c'est-à-dire que chaque plan perpendiculaire à l'axe de rotation X1 du rotor 3 passant par un axe d'un orifice radial 20a, 20b coupe un chignon 7a, 7b correspondant.

L'amenée de fluide 12 est configurée pour acheminer le fluide de refroidissement dans l'orifice central de l'arbre 4 pour projeter du fluide de refroidissement sur les chignons 7a, 7b du bobinage 7 par le au moins un orifice radial 20a, 20b.

Pour acheminer le fluide de refroidissement dans l'orifice central de l'arbre 4, l'arbre 4 est par exemple enfiché dans le palier 6 de la paroi latérale du carter 5 dans laquelle est ménagée l'amenée de fluide 12 et de sorte que l'extrémité de l'orifice central de l'arbre 4 communique fluidiquement avec un orifice de sortie de l'amenée de fluide 12. Un joint dynamique est par exemple prévu entre l'orifice central de l'arbre 4 et l'amenée de fluide 12 pour permettre de garantir l'étanchéité entre l'arbre 4 rotatif et l'amenée de fluide 12 fixe.

Le fluide de refroidissement traverse l'arbre 4 pour être projeté sur les chignons 7a, 7b du bobinage 7 par le au moins un orifice radial 20a, 20b du fait de la pression d'entrée du fluide de refroidissement et de la force centrifuge générée par la rotation de l'arbre 4.

Le circuit de refroidissement peut comporter une pompe permettant d'acheminer un fluide de refroidissement dans l'amenée de fluide 12. Ce circuit de refroidissement peut fonctionner en boucle fermée, de telle façon que l'huile puisse être prélevée par la pompe dans un réservoir et puisse être ensuite récupérée après circulation dans la machine 1 dans ce réservoir.

En fonctionnement, le fluide de refroidissement circule dans le circuit de refroidissement, c'est-à-dire est acheminé par l'amenée de fluide 12, d'une part, dans l'arbre 4 en rotation pour être projeté par force centrifuge sur les chignons 7a, 7b par le au moins un orifice radial 20a, 20b et d'autre part, dans l'anneau creux de refroidissement 15 pour être projeté sur les chignons 7a par le au moins un orifice de sortie 18.

Du fait de la force centrifuge et de sa pression d'entrée, le fluide de refroidissement acheminé dans l'arbre 4 rotatif est projeté radialement via les orifices radiaux 20a, 20b sur les chignons 7a, 7b du bobinage 7.

En parallèle, du fait de la pression d'entrée, le fluide de refroidissement acheminé dans l'anneau creux de refroidissement 15 est projeté en biais via le au moins un premier orifice de sortie 18 dudit anneau 15 vers les chignons 7a.

Le fluide de refroidissement est ainsi projeté en parallèle dans le plan radial par le au moins un orifice radial 20a, 20b ménagé dans l'arbre 4 et dans une direction inclinée par le au moins un premier orifice de sortie 18 ménagé dans la paroi annulaire chanfreinée 17 de l'anneau creux de refroidissement 15.

Il est ainsi possible de refroidir efficacement les chignons 7a, 7b du bobinage 7 malgré la possible faible pression d'entrée du fluide de refroidissement.

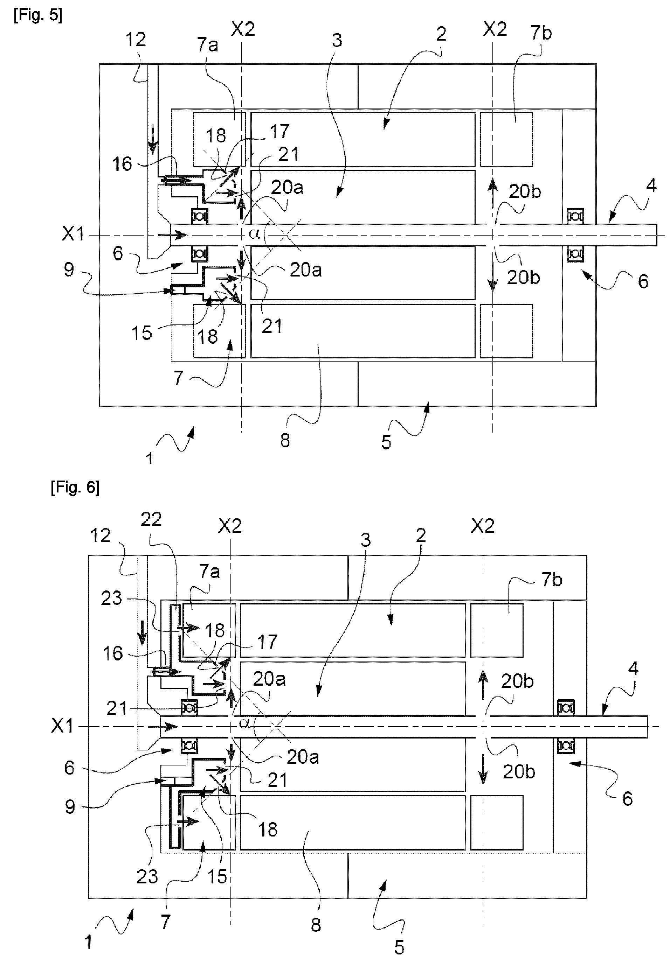

La figure 5 montre un deuxième exemple de réalisation.

Dans cet exemple, au moins un deuxième orifice de sortie 21 est ménagé dans l'anneau creux de refroidissement 15 face au rotor 3, pour projeter le fluide de refroidissement sur le rotor 3 dans une direction axiale. Lorsque le rotor 3 est bobiné, le deuxième orifice 21 permet de refroidir les chignons du rotor.

On profite de la présence de l'anneau creux de refroidissement 15 au plus près du rotor 3 pour le refroidir également.

Il y a par exemple une pluralité de deuxièmes orifices de sortie 21 ménagés dans une paroi radiale de l'anneau creux de refroidissement 15 faisant face au rotor 3, tel qu'entre dix et trente deuxièmes orifices de sortie 21 qui sont répartis angulairement de manière régulière sur la circonférence de la paroi radiale.

Les autres éléments de cet exemple de réalisation sont similaires à ceux du premier exemple de réalisation décrit.

La figure 6 montre un troisième exemple de réalisation.

Dans cet exemple, l'anneau creux de refroidissement 15 présente une couronne 22 en saillie radiale du corps dudit anneau 15. Au moins un troisième orifice de sortie 23 est ménagé dans une paroi radiale de la couronne 22 en vis-à-vis des chignons 7a pour projeter le fluide de refroidissement sur les chignons 7a dans une direction axiale.

Il y a par exemple une pluralité de troisièmes orifices de sortie 23 ménagés dans une paroi radiale de la couronne 22 de l'anneau creux de refroidissement 15, tel qu'entre dix et trente troisièmes orifices de sortie 23 qui sont répartis angulairement de manière régulière sur la circonférence de la paroi radiale.

Bien que dans l'illustration de la figure 6, l'anneau creux de refroidissement 15 présente au moins un premier orifice de sortie 18 pour projeter le fluide de refroidissement sur les chignons 7a dans une direction inclinée, au moins un deuxième orifice de sortie 21 face au rotor 3 pour projeter le fluide de refroidissement sur le rotor 3 dans une direction axiale et au moins un troisième orifice de sortie 23 pour projeter le fluide de refroidissement sur les chignons 7a du bobinage 7 dans une direction axiale, il est également possible que l'anneau creux de refroidissement 15 ne présente qu'au moins un premier orifice de sortie 18 et au moins un troisième orifice de sortie 23.

Les autres éléments de cet exemple de réalisation sont similaires à ceux des exemples de réalisation précédents.

Par ailleurs, bien que les figures illustrent une machine électrique tournante 1 comportant un seul anneau creux de refroidissement 15, il est également possible de disposer un deuxième anneau creux de refroidissement 15 de l'autre côté du rotor 3, cet anneau creux de refroidissement additionnel étant desservi par une amenée de fluide 13 ménagée par exemple dans la paroi latérale opposée du carter 5.

## Revendications

1. Machine électrique tournante (1) comportant :
- un stator (2) comportant un bobinage (7) formant des chignons (7a, 7b) aux extrémités axiales, le stator (2) étant solidaire d'un carter (5) de la machine électrique tournante (1), le carter (5) comprenant au moins un palier (6), de préférence deux paliers (6),
- un rotor (3) solidaire d'un arbre (4) de ladite machine (1),
- un circuit de refroidissement comportant une amenée de fluide (12) ménagée dans le carter (5) et configurée pour acheminer un fluide de refroidissement,
**caractérisé en ce que** le circuit de refroidissement comporte en outre un anneau creux de refroidissement (15) fixé au carter (5) et présentant une entrée (16) communiquant fluidiquement avec l'amenée de fluide (12) et une paroi annulaire chanfreinée (17) dans laquelle au moins un premier orifice de sortie (18) est ménagé pour projeter le fluide de refroidissement sur les chignons (7a) du bobinage (7) dans une direction inclinée par rapport à la direction axiale.

2. Machine électrique tournante (1) selon la revendication précédente, **caractérisée en ce que** l'angle (α) au sommet du cône dans lequel s'inscrit la paroi annulaire chanfreinée (17) est compris entre 80° et 100°, tel que 90°.

3. Machine électrique tournante (1) selon l'une des revendications précédentes, **caractérisée en ce qu'**une pluralité de premiers orifices de sortie (18) sont ménagés dans la paroi annulaire chanfreinée (17), tel qu'entre dix et trente premiers orifices de sortie (18).

4. Machine électrique tournante (1) selon l'une des revendications précédentes, **caractérisée en ce que** l'anneau creux de refroidissement (15) est au moins en partie reçu dans le bobinage (7).

5. Machine électrique tournante (1) selon l'une des revendications précédentes, **caractérisée en ce qu'**une section radiale de l'anneau creux de refroidissement (15) s'inscrit dans un rectangle dont un coin est tronqué par la paroi annulaire chanfreinée (17).

6. Machine électrique tournante (1) selon l'une des revendications précédentes, **caractérisée en ce que** l'entrée (16) de l'anneau creux de refroidissement (15) est tubulaire et s'étend dans une direction axiale, l'anneau creux de refroidissement (15) étant fixé au carter (5) par un dispositif de fixation (9) agencé au niveau de ladite entrée (16).

7. Machine électrique tournante (1) selon l'une des revendications précédentes, **caractérisée en ce qu'**au moins un deuxième orifice de sortie (21) est ménagé dans l'anneau creux de refroidissement (15) face au rotor (3), pour projeter le fluide de refroidissement sur le rotor (3) dans une direction axiale.

8. Machine électrique tournante (1) selon l'une des revendications précédentes, **caractérisée en ce que** l'anneau creux de refroidissement (15) présente une couronne (22) en saillie radiale dans laquelle au moins un troisième orifice de sortie (23) est ménagé pour projeter le fluide de refroidissement sur les chignons (7a) du bobinage (7) dans une direction axiale.

9. Machine électrique tournante (1) selon l'une des revendications précédentes, **caractérisée en ce que** l'arbre (4) présente un orifice central, ouvert à une extrémité axiale et débouchant par au moins un orifice radial (20a, 20b), l'amenée de fluide (12) étant configurée pour acheminer le fluide de refroidissement dans l'orifice central de l'arbre creux (4) pour projeter un fluide de refroidissement sur les chignons (7a, 7b) du bobinage (7) par le au moins un orifice radial (20a, 20b).

10. Machine électrique tournante (1) selon la revendication précédente, **caractérisée en ce qu'**au moins un orifice radial (20a, 20b) est ménagé dans l'arbre (4) de part et d'autre du rotor (3).
